# FASCICULE DE BREVET EUROPEEN

(11) **EP 2 815 210 B1**
(45) Date de publication et mention de la délivrance du brevet: **29.11.2017**
(21) Numéro de dépôt: 13708364.8
(22) Date de dépôt: 14.02.2013
(51) Int. Cl.: G01C 19/5747

(54) **DISPOSITIF DE DETECTION COMPACT D'AU MOINS UNE ACCELERATION ET UNE VITESSE DE ROTATION**
KOMPAKTE MESSVORRICHTUNG FÜR MINDESTENS EINE BESCHLEUNIGUNG UND EINE DREHRATE
COMPACT DECTION DEVICE FOR AT LEAST ONE ACCELERATION AND ONE ROTATIONAL SPEED

(30) Priorité: 15.02.2012 FR 1251395
(43) Date de publication de la demande: 24.12.2014
(73) Titulaire: Commissariat à l'Énergie Atomique et aux Énergies Alternatives, 75015 Paris (FR)
(72) Inventeur: DEIMERLY, Yannick, F-38000 Grenoble (FR)
(74) Mandataire: Brevalex
(86) Numéro de dépôt international: PCT/EP2013/053017
(87) Numéro de publication internationale: WO 2013/120968

(56) Documents cités:
- WO-A1-02/066927
- DE-A1-102010 029 630

## Description

### DOMAINE TECHNIQUE ET ART ANTÉRIEUR

La présente invention se rapporte à un dispositif de détection d'au moins une accélération et une vitesse de rotation à encombrement réduit et à électronique simplifiée.

Il existe des centrales inertielles à cinq axes de détection, trois axes en accélération et deux axes en rotation. Une telle centrale est décrite dans le document Y. Watanabe et al, "Five axis motion sensor with electrostatic drive and capacitive detection fabricated with silicon bulk micromachining", Sensors and Actuators A, Vol 97-98, p 109-115, 2002*.* D'une part cette centrale est réalisée en technologie de volume, ce qui rend sa fabrication longue et coûteuse. D'autre part, la détection de tous les axes de détection et l'excitation sont intriqués. Le traitement des données est alors complexe et un risque d'introduction d'erreurs important existe, celui-ci étant d'autant plus important que la détection capacitive par variation d'entrefer est non-linéaire, cette non-linéarité étant amplifiée lorsque les mouvements sont de forte amplitude, ce qui est le cas des mouvements d'excitation. En outre, la précision de mesure est d'autant plus importante que l'entrefer capacitif est faible, or l'actionnement requiert des entrefers importants pour obtenir des amplitudes significatives.

Le document US 5691471 décrit un capteur apte à mesurer l'accélération dans les trois directions de l'espace et la vitesse de rotation selon les directions de l'espace. Le capteur comporte une masse inertielle suspendue à quatre bras de suspension. La détection des déplacements de la masse est obtenue par des jauges implantées sur les bras de suspension.

Ce capteur est réalisé au moyen d'un empilement de plusieurs substrats. La mise en oeuvre de jauges implantées présente l'inconvénient d'une grande sensibilité à la contrainte.

Le document WO2005/066584 décrit un gyroscope capable de ne mesurer une accélération uniquement dans le plan et une vitesse de rotation autour d'un axe perpendiculaire au plan.

Le document WO02/066927 décrit un capteur de vitesse de rotation comportant un support et deux structures couplées mécaniquement l'une à l'autre en opposition de phase, lesdites structures étant suspendues par rapport au support, chacune des structures comportant :
- une masse d'excitation,
- des moyens d'excitation aptes à mettre en mouvement ladite masse d'excitation dans une direction donnée dite direction d'excitation,
- une masse inertielle solidaire mécaniquement de la masse d'excitation
- un élément de détection relié à la masse inertielle de sorte à être déplacé par celle-ci, ledit élément de détection étant relié à la masse inertielle par des moyens élastiques,
- des moyens de détection du déplacement de ladite masse inertielle dans une direction donnée dite direction de détection, et
- une unité de commande des moyens d'excitation et de traitement des signaux délivrés par les moyens de détection.

### EXPOSÉ DE L'INVENTION

C'est par conséquent un but de la présente invention d'offrir une centrale inertielle apte à mesurer au moins une accélération et au moins une vitesse de rotation, l'accélération pouvant être hors plan et la vitesse de rotation pouvant être autour d'un axe non perpendiculaire au plan, la centrale étant d'encombrements réduit et d'électronique simplifiée et de réalisation aisée.

Le but précédemment énoncé est atteint par une centrale inertielle comportant un substrat et au moins deux masses mobiles par rapport au substrat, lesdites masses étant couplées mécaniquement de sorte à être en opposition de phase, la masse mobile étant en deux parties, des moyens d'excitation de l'une des partie de chaque masse mobile et des moyens de détection du déplacement de l'autre partie de chaque masse mobile, les moyens de détection comportant un élément de détection articulé sur le substrat par une liaison pivot et reliée à la partie mobile dont on veut détecter le déplacement par des moyens élastique.

On réalise un dispositif dans lequel on utilise la mesure d'accélération comme donnée fiable et mesurable par les mêmes éléments que ceux mesurant la vitesse de rotation, alors que dans les capteurs de l'état de la technique on cherche à réaliser des dispositifs qui, lorsqu'ils mesurent l'accélération, sont peu sensibles à la vitesse de rotation et inversement.

Grâce à l'invention, on utilise les mêmes masses d'inertie pour mesurer à la fois l'accélération et la vitesse de rotation. On peut alors réaliser des dispositifs de mesure d'encombrement faible. En outre, il en résulte que la même électronique de lecture peut être utilisée pour mesurer l'accélération et la vitesse de rotation. Ainsi le coût du dispositif est réduit. Par ailleurs le choix d'une articulation pivot et de moyens élastiques permet de déporter les moyens de détection à l'extérieur des masses et de réaliser des mesures d'accélération et de vitesse de rotation hors plan.

La mise en oeuvre de moyens élastiques entre l'élément de détection et la masse mobile dont on veut détecter le déplacement permet de transmettre majoritairement les mouvements selon la direction de détection à l'élément de détection.

Dans un exemple particulièrement avantageux, l'élément de détection comporte deux portions articulées l'une par rapport à l'autre au moyen d'une liaison pivot. Cet exemple offre une sensibilité augmentée.

En combinant plusieurs de ces dispositifs on peut mesurer des accélérations et des vitesses de rotation selon plusieurs directions de l'espace. Avantageusement, ils peuvent utiliser la même boucle d'excitation, ce qui réduit la consommation en énergie.

La central inertielle est avantageusement réalisée sous forme de système microélectromécanique et/ou nanoélectromécanique, cette centrale pouvant être réalisée par des technologies dites de surface.

La présente invention a alors pour objet un dispositif de détection d'une accélération dans au moins une direction et d'une vitesse de rotation dans au moins une autre direction, comportant un support et au moins deux structures couplées mécaniquement l'une à l'autre en opposition de phase, lesdites structures étant suspendues par rapport au support, chacune des structures comportant :
- une masse d'excitation,
- des moyens d'excitation aptes à mettre en mouvement ladite masse d'excitation dans une direction donnée dite direction d'excitation,
- une masse inertielle solidaire mécaniquement de la masse d'excitation,
- un élément de détection relié à la masse inertielle de sorte à être déplacé par celle-ci, ledit élément de détection étant articulé sur le support au moyen d'une articulation pivot et relié à la masse inertielle par des moyens élastiques,
- des moyens de détection du déplacement de ladite masse inertielle dans une direction donnée dite direction de détection, et
- une unité de commande des moyens d'excitation et de traitement des signaux délivrés par les moyens de détection.

La direction d'excitation et la direction de détection sont orthogonales entres elles. Par ailleurs la direction d'excitation et la direction de détection peuvent-être soit dans le plan du support ou soit dans un plan perpendiculaire à celui-ci. Ainsi si l'on définit le plan du support par les axes X et Y et par Z la direction perpendiculaire à ce plan, si la direction d'excitation est selon la direction X (respectivement Y ou Z), la direction de détection sera alors selon la direction Y ou Z (respectivement X ou Z ou encore x ou Y).

Ainsi, la vitesse de rotation détectée par le dispositif de l'invention est perpendiculaire à la direction de détection ainsi qu'à la direction d'excitation et la direction de l'accélération détectée correspond à la direction de détection.

Dans un exemple de réalisation très avantageux, l'élément de détection comporte une première portion et une deuxième portion connectées par une liaison pivot, la première portion étant articulée sur le support par la liaison pivot et la deuxième portion étant connectée à la masse inertielle par les moyens élastiques, la liaison pivot entre les première et deuxième portions présentant un axe parallèle à celui de la liaison pivot entre le support et la première portion.

Dans un exemple de réalisation, de manière avantageuse, les deux structures sont couplées mécaniquement en opposition de phase par une liaison en forme de losange, lesdites structures étant reliées au niveau de deux sommets de celles-ci reliés par une diagonale dudit losange.

Dans un exemple avantageux, le dispositif de détection comporte des moyens élastiques ancrés sur le support et reliés à l'élément de détection.

L'élément de détection de chaque structure peut être relié au support par une liaison mécanique ou il peut être en regard du support de façon à induire un couplage capacitif avec les moyens de détection.

Dans un exemple de réalisation, chaque masse d'excitation a la forme d'un cadre à l'intérieur duquel est suspendue la masse inertielle et l'élément de détection est un bras relié à la masse inertielle.

Dans un mode de réalisation, chaque masse inertielle et l'élément de détection associé sont reliés de façon à transmettre majoritairement les mouvements selon la direction de détection à l'élément de détection, lesdites masses inertielles étant destinées à se déplacer selon une direction contenue dans un plan moyen du dispositif de détection. Par exemple, au moins une liaison pivot entre l'élément de détection et le support est formée par deux poutres flexibles dans le plan, fixées par une extrémité sur le support en deux points distincts et par une autre extrémité sur l'élément de détection et définissant l'axe de pivot à l'intersection de l'axe des poutres flexibles.

Dans un autre mode de réalisation, chaque masse d'inertie et l'élément de détection associés sont reliés de façon à transmettre majoritairement les mouvements dans la direction de détection à l'élément de détection, lesdites masses inertielles étant destinées à se déplacer selon une direction perpendiculaire à un plan moyen du dispositif de détection. Au moins une liaison pivot entre l'élément de détection et le support est une liaison pivot hors plan formée par une poutre fixée d'une part à l'élément de détection et d'autre part par deux extrémités au support.

Par exemple, les moyens de détection comportent au moins une jauge piézorésistive reliée à l'élément de détection. Avantageusement, les moyens de détection comportent deux jauges piézorésistives montées en différentiel. Avantageusement, la ou les jauges sont par exemple reliées à la partie de détection dans la zone de la liaison pivot.

Dans un autre exemple, les moyens de détection sont de type capacitif, et comportent au moins une électrode, l'élément de détection formant avec ladite électrode un condensateur à capacité variable. Alternativement, les moyens capacitifs peuvent être formés, par des peignes interdigités avec les peignes formant l'élément de détection.

Les moyens de détection peuvent comporter avantageusement deux électrodes entre lesquelles est logé l'élément de détection, l'élément de détection formant avec chacune desdites électrodes un condensateur à capacité variable montés en différentiel. Les moyens de détection capacitifs sont avantageusement situés à l'opposé de la liaison pivot par rapport à la masse inertielle.

Les moyens d'excitation peuvent être de type électrostatiques comportant au moins une paire de peignes interdigités par masse d'excitation, un peigne étant sur le support et un autre peigne étant solidaire de la masse d'excitation.

L'unité de commande des moyens d'excitation et de traitement des signaux délivrés par les moyens de détection peut comporter des moyens de démodulation desdits signaux et des moyens de sommation et de soustraction desdits signaux démodulés.

Dans le cas où la direction d'excitation est hors plan, les signaux délivrés par les moyens de détection permettent d'obtenir directement sans démodulation les signaux correspondant à l'accélération, en revanche ces signaux délivrés par les moyens de détection sont démodulés pour obtenir les signaux correspondant à la vitesse de rotation.

L'unité de commande et de traitement peut comporter également des moyens d'amplification desdits signaux.

La présente invention a également pour objet un système de détection d'accélérations dans deux directions différentes et de vitesse de rotation selon deux directions différentes, comportant au moins deux dispositifs de détection selon invention.

Les moyens de couplage mécanique en opposition de phase sont avantageusement communs aux deux dispositifs de détection. Les moyens de couplage mécanique en opposition de phase peuvent être formés par quatre poutres assemblées en losange, les deux structures de chaque dispositif étant reliées au losange au niveau de deux sommets situés sur la même diagonale du losange.

La présente invention a également pour objet un système de détection d'accélérations dans trois directions différentes et de vitesse de rotation selon trois directions différentes, comportant deux systèmes de détection selon la présente invention, lesdits systèmes étant orientés l'un par rapport à l'autre de sorte que les accélérations dans les trois directions et les vitesses de rotation selon les trois directions soient détectées.

La présente invention a également pour objet un système de détection d'accélérations dans trois directions différentes et de vitesse de rotation selon trois directions différentes, comportant quatre dispositifs de détection selon la présente invention.

Les moyens de couplage mécanique en opposition de phase sont avantageusement communs aux quatre dispositifs de détection.

Les moyens de couplage mécanique en opposition de phase sont par exemple formés par quatre poutres disposées en losange, deux structures de deux dispositifs de détection différents étant reliées à un sommet du losange, les deux structures d'un même dispositif étant reliées à deux sommets situés sur la même diagonale du losange.

La présente invention a également pour objet un système de détection d'accélérations dans trois directions différentes et de vitesse de rotation selon trois directions différentes, comportant un système de détection selon la présente invention et en outre un accéléromètre et un gyromètre.

La présente invention a également pour objet un procédé de détection d'accélération ou de la vitesse de rotation à partir d'un dispositif de détection selon la présente invention, comportant les étapes de :
- excitation des masses d'excitation par les moyens d'excitation,
- détection du déplacement de l'élément de détection par les moyens de détection,
- traitement des signaux de détection de chacun des éléments de détection,
- détermination de l'accélération ou de la vitesse de rotation.

L'étape de traitement peut comporter une sous-étape de démodulation des signaux et une sous-étape de sommation et de soustraction des signaux de chacun des éléments de détection.

### BRÈVE DESCRIPTION DES DESSINS

La présente invention sera mieux comprise à l'aide de la description qui a suivre et des dessins en annexes sur lesquels :
- la figure 1 est une représentation schématique d'un exemple de réalisation d'un centrale inertielle capable de mesurer une accélération dans le plan et une vitesse de rotation hors plan, vue de dessus,
- la figure 2 est une représentation d'une vue de dessus d'une réalisation pratique de la centrale inertielle de la figure 1,
- les figures 3A et 3B sont des exemples de réalisation de moyens élastiques destinés à relier deux partie mobiles l'une par rapport à l'autre et une partie mobile par rapport au support respectivement,
- la figure 4 est une vue de dessus d'une central inertielle capable de mesurer une accélération hors plan et une vitesse de rotation dans le plan,
- la figure 5 est une représentation schématique d'un autre exemple de réalisation d'un centrale inertielle capable de mesurer une accélération dans le plan et une vitesse de rotation hors plan, vue de dessus,
- la figure 6A est une représentation schématique d'un exemple de réalisation d'un centrale inertielle capable de mesurer une accélération dans le plan et une vitesse de rotation hors plan mettant en oeuvre des moyensde détection capacitifs, vue de dessus,
- la figure 6B est une représentation schématique d'un autre exemple de réalisation d'un centrale inertielle capable de mesurer une accélération dans le plan et une vitesse de rotation hors plan mettant en oeuvre des moyens de détection capacitifs, vue de dessus, dans lequel une masse inertielle et un élément de détection sont confondus,
- la figure 7 est une vue de dessus d'un exemple de réalisation d'une centrale inertielle apte à mesurer une accélération dans deux directions et une vitesse de rotation dans deux directions,
- la figure 8 est une vue de dessus d'un exemple de réalisation d'une centrale inertielle apte à mesurer une accélération dans trois directions et une vitesse de rotation dans trois directions,
- la figure 9 est une vue schématique de dessus d'un autre exemple de réalisation d'une centrale inertielle apte à mesurer une accélération dans trois directions et une vitesse de rotation dans trois directions,
- la figure 10 est une vue schématique de dessus d'un autre exemple de réalisation d'une centrale inertielle apte à mesurer une accélération dans trois directions et une vitesse de rotation dans trois directions,
- les figures 11A, 11B, 12 et 13 sont des exemples de circuits utilisés pour le traitement des signaux de détection,
- les figures 14A à 14I sont des représentations schématiques de différentes étapes d'un exemple de procédé de réalisation d'une centrale inertielle selon l'invention,
- la figure 15 est une vue de dessus d'une centrale inertielle capable de mettre en mouvement la masse d'excitation dans la direction Z pour détecter l'accélération suivant l'axe Y et la vitesse de rotation suivant l'axe X,
- la figure 16A est une vue de détail d'un exemple de réalisation particulièrement avantageux d'un élément de détection dans le cas d'un déplacement dans le plan,
- la figure 16B est une vue agrandie de la figure 16A,
- la figure 17A est une vue de détail d'un exemple de réalisation particulièrement avantageux d'un élément de détection dans le cas d'un déplacement hors-plan,
- la figure 17B est une vue agrandie de la figure 17A.

### EXPOSÉ DÉTAILLÉ DE MODES DE RÉALISATION PARTICULIERS

Dans la description qui va suivre, les termes "capteur", "dispositif de détection" et "centrale inertielle" seront utilisés indistinctement.

Les orientations des directions X, Y et Z sont identiques sur toutes les figures.

A titre d'exemple, on définit les axes X, Y et Z comme suit :
- les axes X et Y définissent le plan de la centrale inertielle, dans les représentations ceux-ci sont contenus dans le plan de la feuille, la direction X est la direction horizontale, la direction Y est la direction verticale, et
- l'axe Z est perpendiculaire au plan de la centrale, et au plan de la feuille dans les représentations.

Nous rappelons que lorsque:
- la direction d'excitation est la direction X et la direction de détection est la direction Z, on détecte l'accélération suivant la direction Z et la vitesse de rotation suivant la direction Y,
- la direction d'excitation est la direction X et la direction de détection est la direction Y, on détecte l'accélération suivant la direction Y et la vitesse de rotation suivant la direction Z,
- la direction d'excitation est la direction Z et la direction de détection est la direction Y, on détecte l'accélération suivant la direction Y et la vitesse de rotation suivant la direction X.

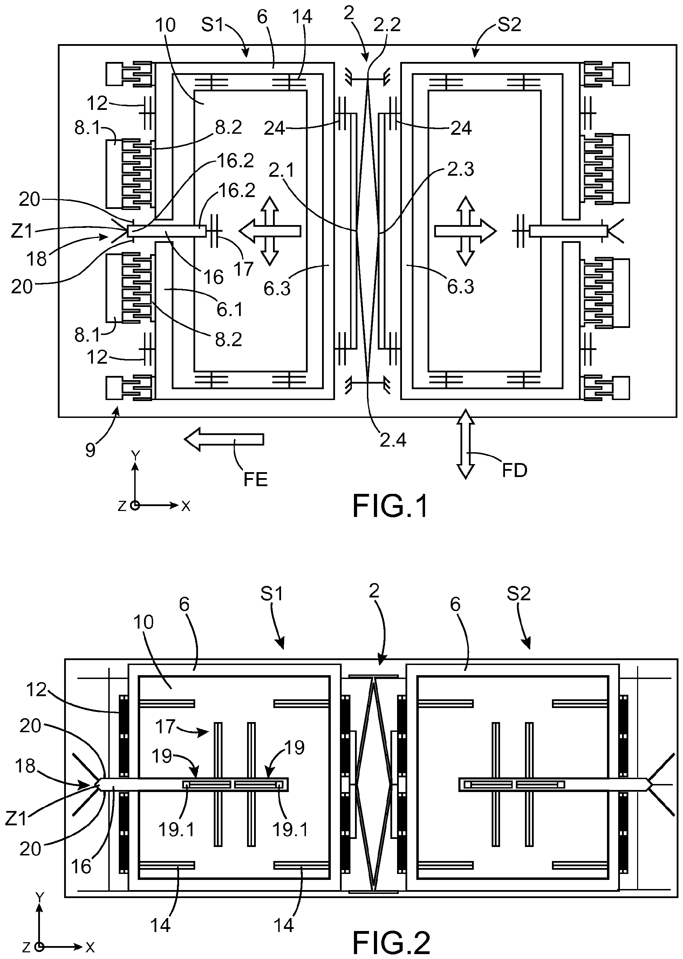

Sur la figure 1, on peut voir une vue de dessus un exemple de réalisation d'une centrale inertielle apte à détecter une accélération selon Y et une vitesse de rotation selon Z.

La centrale de la figure 1 comporte deux structures S1, S2 couplées mécaniquement par des moyens élastique 2.

Les deux structures S1 et S2 sont montées mobiles sur un support 4. Les deux structures S1 et S2 sont de réalisations similaires, seule la structure S1 sera décrite en détail.

La structure S1 comporte plusieurs parties mobiles entre elles. La structure S1 comporte une première partie, dite masse d'excitation 6 associée à des moyens d'excitation 8 selon la direction X, une masse inertielle 10 associée à une partie de détection et des moyens de détection 11.

La masse d'excitation 6 est destinée à être mise en mouvement le long de l'axe X par les moyens d'excitation. La partie inertielle 10 est destinée à être mise en mouvement par une accélération le long de l'axe Y ou une vitesse de rotation autour de l'axe Z, son mouvement est alors détecté par les moyens de détection 11.

La masse d'excitation 6 sera aussi désignée "masse d'excitation", et la partie inertielle 10 sera aussi appelée "masse inertielle".

Dans l'exemple représenté, la masse d'excitation 6 est formée par une cadre suspendu par rapport au support 4 par des moyens élastiques 12. Les moyens d'excitation 8 sont, dans l'exemple représenté, de type électrostatique et comportent des paires de peignes 8.1, 8.2 interdigités. Un peigne 8.1 de chaque paire est porté par le support 4 et l'autre peigne 8.2 de chaque paire et porté par le cadre de sorte à ce que les dents des peignes d'un paire s'interdigitent. L'application d'une tension entre les peignes de chaque paire provoque l'apparition de forces électrostatiques entre les dents, et un rapprochement ou un éloignement des peignes et une mise en mouvement des cadres selon l'axe X.

Des électrodes de détection 9 sont également avantageusement prévues entre la masse d'excitation 6 et le support 4 pour détecter le mouvement d'excitation de la masse d'excitation et former une boucle de rétroaction. Dans l'exemple représenté, les électrodes 9 sont sous forme de peignes interdigités de part et d'autre des peignes d'excitation.

Les peignes 8.1, 8.2 sont disposés sur un bord du cadre perpendiculaire à la direction X de sorte à provoquer un déplacement du cadre 6 le long de la direction X.

On peut envisager de mettre en oeuvre d'autres moyens d'excitation, tels que des moyens de type piézoélectrique ou magnétique.

Dans l'exemple représenté, la partie inertielle 10 a la forme d'un parallélépipède rectangle monté dans la masse d'excitation 6 et est suspendue à celle-ci par des moyens de suspension 14. Ainsi les mouvements d'excitation de la masse d'excitation sont transmis à la partie inertielle 10, qui peut cependant avoir son mouvement propre selon l'axe Y ou Z.

La partie de détection est formée par un bras de détection 16, couplé par une extrémité 16.1 à la partie inertielle 10 par des moyens élastiques 17, et mobile en rotation par une liaison pivot 18 autour d'un axe Z1 parallèle à l'axe Z par rapport au support 4 par une deuxième extrémité 16.2.

La liaison pivot est, dans l'exemple représenté, formée par deux poutres flexibles dans le plan, fixées par une extrémité sur le support 4 en deux point distincts et par une autre extrémité sur le bras de détection 16 et définissant l'axe de pivot Z1 au niveau de l'intersection de l'axe des poutres. Cette configuration a pour effet avantageux d'offrir une rotation pure ou quasiment pure du bras de détection autour de l'axe Z1.

Les moyens de détection comportent une paire de jauges piézorésistives 20 disposées entre le support 4 et le bras de détection 16 perpendiculaire à l'axe longitudinal X du bras de détection 16 de sorte que le déplacement en rotation du bras de détection 16 autour du pivot d'axe Z1, provoque la compression de l'une des jauges 20 et l'extension de l'autre jauge 20. La sollicitation des jauges permet alors de déterminer le déplacement du bras de détection 16 et donc de la partie inertielle 10. Dans l'exemple représenté, les deux jauges 20 sont avantageusement montées en différentiel, ce qui permet de s'affranchir de l'effet des variations de température. Les paires de jauges 20 sont connectées par exemple sous la forme de pont, par exemple pont de Wheatstone. On pourrait cependant prévoir de n'utiliser qu'une seule jauge piézorésistive, disposée comme l'une ou l'autre des jauges 20. De manière avantageuse et comme cela est représenté sur la figure 1, la ou les jauges 20 est ou sont situées au plus près de l'axe du pivot Z1 de sorte que les jauges voient une contrainte maximale.

Comme indiquée ci-dessus, la structure S2 est similaire à la structure S1. Les deux structures s1 et S2 sont disposées l'une à côté de l'autre de sorte à être symétriques l'une de l'autre par rapport à un plan parallèle au plan YZ. Ainsi les montants 6.3 des cadres non munis de peignes sont parallèles et en regard.

Les moyens de couplage 2 des deux structures relient les deux parties d'excitation 6. Ceux-ci sont disposés entre les deux structures est sont reliés aux montants 6.3 des masses d'excitation 6.

Les moyens de couplage 2 sont tels qu'ils assurent un couplage en opposition de phase, i.e. lorsque les masses sont excitées, celles-ci s'éloignent ou se rapprochent l'une de l'autre en phase.

De manière avantageuse les moyens de couplage assurent un couplage fort. On entend par "couplage fort" entre deux masses mobiles une liaison mécanique telle que si on déplace une première masse d'une amplitude A0, induisant un déplacement de la deuxième masse d'une amplitude A1, puis qu'on déplace la deuxième masse d'une amplitude A1 induisant un mouvement d'une amplitude A2 sur la première masse, les amplitudes A0 et A2 sont sensiblement les mêmes.

Un couplage faible est également envisageable.

Dans l'exemple représenté, les moyens de couplage 2 comportent une structure fermée de poutres en losange, deux sommets 2.1, 2.3 opposés étant reliés aux parties d'excitation 6 de chacune des structures, via des poutres 24 qui sont reliées par des moyens élastiques 24 aux bords 6.3.

Les deux autres sommets 2.2, 2.4 sont reliés à des poutres 26 ancrées sur le substrat à leur extrémité. Les moyens de couplage 2 se déforment le long de l'axe X et permettent aux masses d'excitation 6 et aux masses inertielles 10 de s'éloigner et de se rapprocher le long de l'axe X.

Les moyens d'excitation et les jauges de contrainte 20 sont connectés à une unité de commande et de traitement (non représentée) afin de commander les parties d'excitation 6 et traiter les mesures transmises par les jauges 20 et en déduire l'accélération ou la vitesse de rotation. L'unité de commande et de traitement sera décrite ci-dessous.

Nous allons maintenant expliquer le fonctionnement du capteur de la figure 1.

La flèche FE symbolise le mouvement d'excitation et la flèche FD symbolise le mouvement de détection.

Une tension est appliquée aux peignes interdigités 8.1, 8.2, il en résulte l'apparition de forces électrostatiques et la mise en mouvement des masses d'excitation 6 le long de la direction X. Les masses d'excitation 6 transmettent le mouvement d'excitation aux masses inertielles 10 à travers les moyens de suspension 14.

Une accélération aY le long de la direction Y ou une vitesse de rotation ΩZ autour de l'axe Z génère au centre des masses une force selon l'axe Y. Cette force met en mouvement les masses inertielles 10 le long de la direction Y.

Les signaux d'excitation des deux masses d'excitation 6 sont tels que les masses d'excitation sont excitées en opposition de phase, les parties d'excitation 6 s'éloignent ou se rapprochent l'une de l'autre en phase.

Du fait de cette excitation en opposition de phase et des moyens de couplage 2, une accélération dans la direction Y entraine les deux masses 10 inertielles dans le même sens. Alors que les forces de Coriolis utilisées pour mesurer une vitesse de rotation entraînent les deux masses inertielles 10 le long de la direction Y en sens opposé.

Les bras 16 sont alors mis en rotation autour de leur liaison pivot 18 mais en sens opposé. Cette rotation est transmise aux jauges 20 qui subissent pour l'une un effort de compression et pour l'autre un effort de traction. Ces efforts provoquent des variations de résistance dans les jauges piézorésistives 20.

Les réponses envoyées par chaque paire de jauges 20 à l'unité de commande et de traitement sont donc opposées.

Dans le tableau ci-dessous, sont regroupées l'influence d'une accélération et d'une vitesse de rotation sur chacun des ponts de jauges. On considère que les deux ponts de jauges fournissent des signaux en valeur absolue identiques.

| | Pont de jauges de la structure 1 ΔR₁ | Pont de jauges de la structure 2 ΔR₂ | Signal accéléromètre ΔR₁+ΔR₂ | Signal gyroscopique ΔR₁-ΔR₃ |
|---|---|---|---|---|
| Accélération selon Y | ↑ | ↑ | ↑ | 0 |
| Vitesse de rotation selon Z | ↑ | ↓ | 0 | ↑ |

Le sens de la flèche symbolise l'influence de l'accélération et de la vitesse de rotation sur les ponts de jauges. Dans le cas d'une accélération selon Y, l'influence est la même sur les deux ponts jauges et dans le cas d'une vitesse de rotation, les influences sont opposées. Puisque les deux bras de détection 16 ont la même amplitude de mouvement, dans le cas d'une accélération selon Y les influences s'additionnent, et dans le cas d'une vitesse de rotation, les influences se soustraient et s'annulent.

Ainsi, grâce à l'invention, il est possible avec la même électronique de lecture de mesurer une accélération et une vitesse de rotation et de discriminer les signaux très simplement. L'encombrement est donc diminué.

En outre, ce capteur présente un bruit en 1/f réduit.

Sur la figure 2, on peut voir une réalisation pratique de la centrale inertielle de la figure 1 permettant une détection d'une accélération dans le plan de la centrale et une détection d'une vitesse de rotation hors-plan, i.e. selon l'axe Z.

Les références de la figure 1 seront reprises pour les éléments communs. Les moyens d'excitation ne sont pas représentés mais sont par exemple du type peignes interdigités.

Dans cette réalisation, les moyens de suspension 14 de la partie inertielle relient la partie inertielle aux montants 6.1, 6.3 de la masse d'excitation 6.

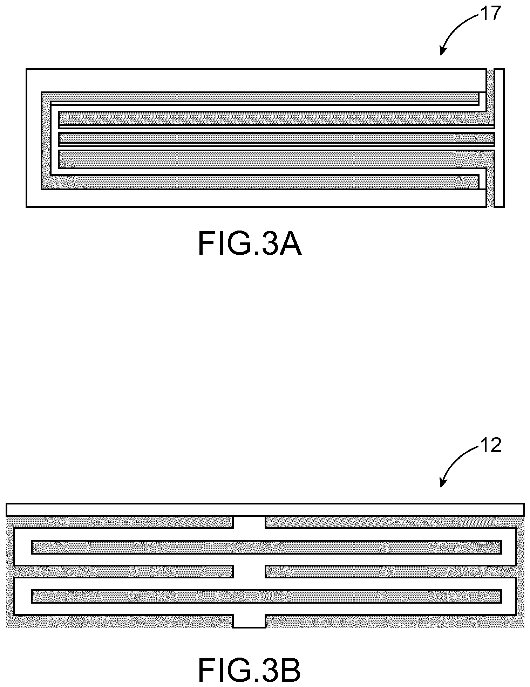

La partie inertielle 10 est reliée au bras de détection 16 par des moyens élastiques 17, par exemple du type de ceux représentés sur la figure 3A. De manière avantageuse deux paires de ressort relient la partie inertielle au bras, ce qui améliore la symétrie dans la transmission. La mise en oeuvre de ces moyens permet de ne transmettre au bras de détection 16 que le mouvement dans la direction Y de la partie inertielle, et non le mouvement dans la direction X.

De manière avantageuse le bras de détection 16 est lui-même relié au support 4 par deux moyens élastiques 19 ancrés sur le support 4 par un plot d'ancrage 19.1, ce qui permet d'annuler le mouvement du bras de détection 16 selon X. Par exemple, ces moyens élastiques 19 sont également de type de ceux de la figure 3A.

Les moyens de suspension 12 de la masse d'excitation 6 sont par exemple du type de ceux représentés sur la figure 3B.

Sur les figures 3A et 3B, on peut voir des exemples de réalisation des moyens élastiques reliant les différentes parties de chacune des structures.

Sur la figure 3A, il s'agit d'un ressort dit "ressort folded", celui-ci est relié par une extrémité longitudinale au bras de détection et comporte deux lames reliées à la masse inertielle, et sur la figure 3B il s'agit d'un ressort dit ressort en U-shape, dans lequel les extrémités de connexion sont situées sur les flancs de plus grande longueur. Ces deux moyens élastiques peuvent être utilisés indifféremment. Ces moyens élastiques sont des moyens bien connus de l'homme du métier et ne seront pas décrit en détail.

De façon avantageuse la sensibilité du signal de détection est amplifiée si la fréquence de résonance de la partie ou élément de détection est proche voire égale de la fréquence de résonance de la partie excitation.

D'autres dispositions entre la partie d'excitation, la masse inertielle et la masse de détection sont envisageables sans sortir du cadre de la présente invention.

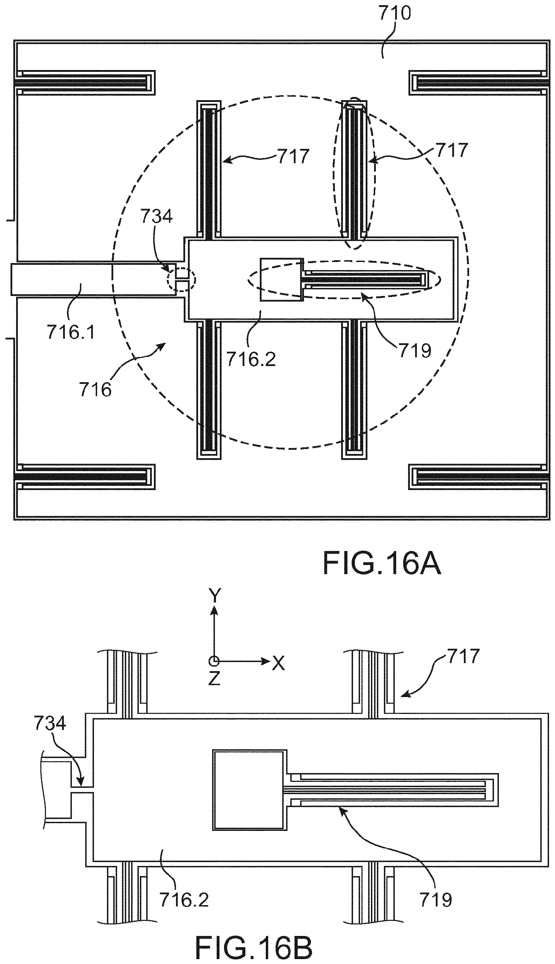

Sur les figures 16A et 16B, on peut voir un exemple de réalisation particulièrement avantageux d'une centrale inertielle apte à détecter une accélération dans le plan et une vitesse de rotation hors-plan offrant une sensibilité augmentée. Cette centrale se distingue de celle de la figure 2, en ce que l'élément de détection 716 comporte deux portions 716.1, 716.2 reliées par une liaison pivot 734 d'axe perpendiculaire au plan de la centrale et parallèle à la liaison pivot entre le support et l'élément de détection 716 (non représentée). La première portion 716.1 est articulée en rotation sur le support et la deuxième portion 716.2 est reliée par des moyens élastiques 717 à la partie inertielle 710.

Dans l'exemple représenté, la liaison pivot 734 est formée par une poutre de largeur réduite apte à fléchir autour d'un axe perpendiculaire au plan de la centrale. La liaison pivot 734 permet de transformer le mouvement de translation de la partie inertielle 710 le long de l'axe Y en un mouvement de rotation autour de la liaison pivot 718, offrant alors une plus grande mobilité à la première portion de détection 716.1. La sensibilité de la centrale est alors augmentée.

Les moyens élastiques 717 sont similaires à ceux représentés sur les figures 3A et 3B, ils permettent de ne transmettre à l'élément de détection 716 que le mouvement dans la direction Y de la partie inertielle, et non le mouvement dans la direction X.

Les moyens élastiques 719 permettent d'annuler le mouvement de l'élément de détection 716 selon X.

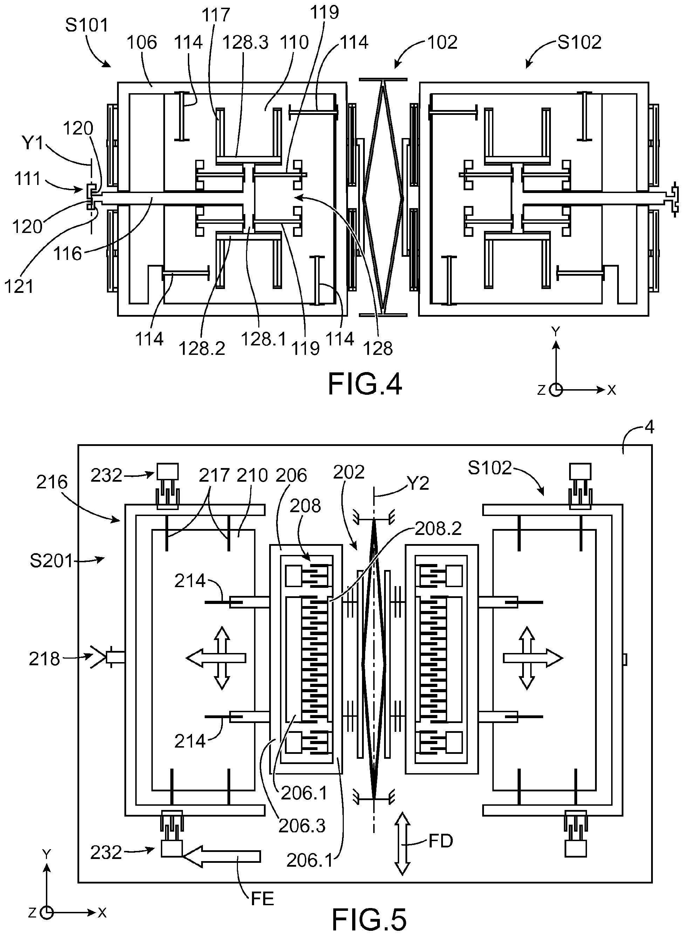

Sur la figure 4, on peut voir un exemple de réalisation d'une centrale inertielle apte à détecter une accélération hors-plan et une vitesse de rotation dans le plan.

La centrale inertielle est réalisée de telle sorte que les parties de détection puissent avoir un déplacement hors plan, i.e. le long de la direction Z et non le long de la direction X ou Y.

Pour cela, les moyens élastiques de suspension ont été modifiés par rapport à ceux de l'exemple de la figure 2, de sorte à autoriser les déplacements hors plan et à exercer une force de rappel sur les parties de détection 116 vers la position repos. Les moyens élastiques de suspension 114 sont formés par exemple par quatre poutres reliées chacune par une extrémité à une face intérieure du cadre de la masse d'excitation 106 et par une autre extrémité à la masse mobile 110. Les poutres travaillent en flexion. Par ailleurs, les bras de détection 116 sont mobiles en rotation par rapport au support autour de l'axe Y1 parallèles à l'axe Y.

Dans l'exemple représenté, le bras de détection 116 est relié au niveau de son extrémité à la partie inertielle 110 de manière à n'autoriser que la transmission des mouvements hors-plan. La connexion mécanique entre le bras de détection 116 et la partie inertielle 110 se fait par l'intermédiaire d'une pièce en I, dont les bases d'extrémité I 128.2, 128.3 sont chacune reliées à la partie inertielle par deux ressorts 117 permettant un déplacement de la partie inertielle 110 le long de l'axe Z et un déplacement du bras de détection 116 dans le plan sans gêner le déplacement de la partie inertielle 110 et sans déformer le bras de détection 116. En outre deux paires de moyens élastiques 119 relient le corps du I au support. Le mouvement le long de la direction d'excitation n'est pas transmis au bras de détection 116.

Par ailleurs, le bras de détection comporte à son extrémité longitudinale articulée sur le support un arbre 121 perpendiculaire à l'axe longitudinal du bras de détection 116 et d'axe confondu avec l'axe de rotation du bras de détection. Les moyens de détection 111 comportent des jauges 120 reliées à l'arbre 121 et orienté selon X. L'arbre comporte deux extrémités amincies destinées à se déformer en torsion autour de l'axe de rotation. Comme sur les figures 1 et 2, les deux jauges sont disposées par rapport à l'axe de rotation de sorte à être sollicitées de manière contrainte, lorsque l'une subit un effort de traction l'autre subit un effort de compression.

Le fonctionnement de la centrale de la figure 4 est similaire à celui de la centrale des figures 1 et 2.

Sur la figure 5, on peut voir un autre exemple de réalisation d'une centrale inertielle. Dans cet exemple, la masse d'excitation et la masse inertielle sont juxtaposées dans le plan XY et les moyens d'excitation sont situés au centre de la centrale.

Comme dans les exemples précédents, la centrale comporte deux structures S201, S202 symétriques par rapport à un plan passant par l'axe Y2.

Les deux structures S201, S202 sont couplées par des moyens élastiques 202 similaires à ceux décrits en relation avec la figure 1.

La structure S201 comporte une masse d'excitation 206 sous la forme d'un cadre. Les moyens d'excitation 206 qui sont du type électrostatique sont situés à l'intérieur du cadre. Un peigne 208.1 est réalisé sur le support et s'étend parallèlement à l'axe Y, et un peigne 208.12 est réalisé dans une face intérieure d'un montant 206.1 du cadre de la masse d'excitation 206.

La masse inertielle 210 sous forme de parallélépipède rectangle est située à côté de la masse d'excitation 206. La masse d'excitation et la masse inertielle sont reliées par des moyens élastiques 214 permettant un déplacement de la partie inertielle 210 le long de la direction Y par rapport à la masse d'excitation 206.

En outre, le bras de détection 216 est en forme de U entourant sur les trois côtés de la partie inertielle 210 qui ne sont pas reliés à la masse d'excitation 206. Le bras de détection 216 en forme de U est relié par de moyens élastiques 217 aux côtés de la masse inertielle parallèles à la direction X.

De plus le bras de détection en forme de U est mobile en rotation sur le support 4 par une liaison pivot 218 d'axe parallèle à la direction Z. la liaison pivot est située au centre du fond du U de l'élément 230.

Les flèches FE symbolisent le mouvement d'excitation et la flèche FD symbolise le mouvement de détection.

La structure S202 est identique à la structure S201. Les moyens de couplage 202 sont reliés aux parties d'excitation, plus particulièrement aux montants 206.1.

Des électrodes de contre-réaction 232, sous forme de peignes interdigités, sont avantageusement prévues entre l'élément en U 216 et le support.

Cet exemple de réalisation facilite l'intégration des électrodes de contre-réaction.

Dans cet exemple de réalisation, les connexions électriques des peignes sont réalisées par des via de type TSV (Through Silicon Via en terminologie anglaise).

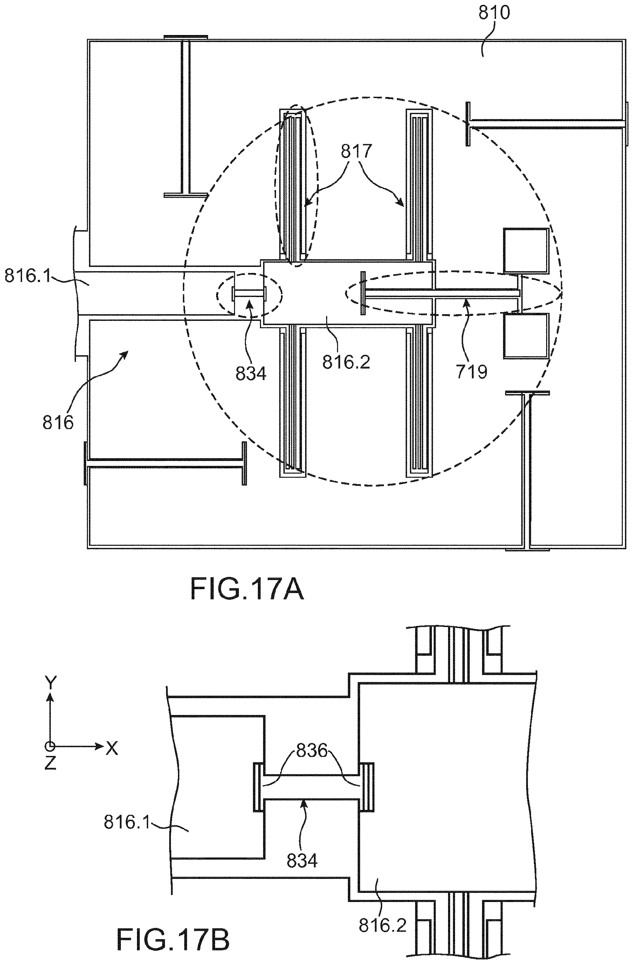

Sur les figures 17A et 17B, on peut voir un exemple de réalisation avantageux d'une centrale inertielle apte à détecter une accélération hors-plan et une vitesse de rotation dans le plan offrant une sensibilité augmentée. Cette centrale se distingue de celle de la figure 4, en ce que l'élément de détection 816 comporte deux portions 816.1, 816.2 reliées par une liaison pivot 834 d'axe parallèle au plan de la centrale et parallèle à la liaison pivot entre le support et l'élément de détection 816 (non représentée). La première portion 816.1 est articulée en rotation sur le support et la deuxième portion est reliée par des moyens élastiques 817 à la partie inertielle 810.

Dans l'exemple représenté, la liaison pivot 834 est formée par une poutre d'axe X articulée à ses deux extrémités longitudinales sur les deux portions 816.1, 816.2 par des poutres 836 d'axe Y déformables. La liaison pivot permet de transformer le mouvement de translation de la partie inertielle 810 le long de l'axe Z en un mouvement de rotation autour de la liaison pivot 818, offrant alors une plus grande mobilité à la première portion de détection 816.1. La sensibilité de la centrale est alors augmentée.

Les moyens élastiques 817 sont similaires à ceux représentés sur les figures 3A et 3B, ils permettent de ne transmettre à l'élément de détection 816 que le mouvement dans la direction Z de la partie inertielle, et non le mouvement dans la direction X.

Les moyens élastiques 819 permettent d'annuler le mouvement de l'élément de détection 816 selon X. Dans cet exemple, les moyens élastiques 819 sont similaires à ceux de la centrale de la figure 4.

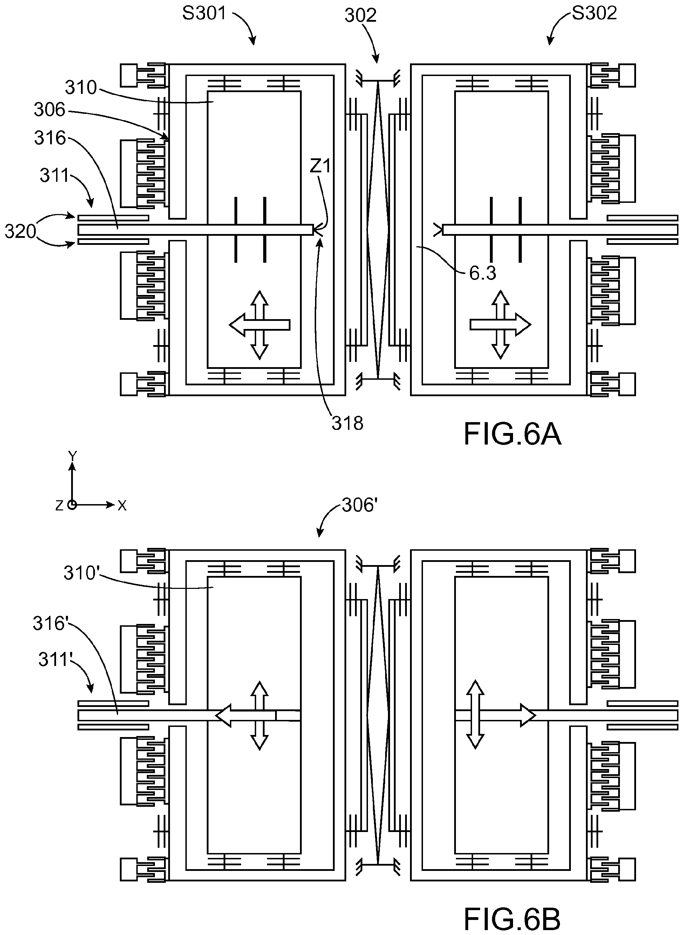

Sur la figure 6A, on peut voir un autre exemple de réalisation d'une centrale inertielle qui se distingue de celle de la figure 1 par le fait que les moyens de détection sont de type capacitif et non piézorésistif.

Les moyens de détection capacitifs 311 comportent deux électrodes 320 disposées de part et d'autre du bras de détection et définissant avec le bras de détection deux condensateurs à capacité variable C1, C2.

Ces moyens capacitifs peuvent être adaptés sur la centrale de la figure 1.

De manière très avantageuse, et comme on peut le voir sur la figure 6A, les électrodes sont disposées au plus loin de la liaison pivot 318 du bras de détection 316 de sorte que le déplacement de la partie du bras de détection située entre les électrodes 320 soit maximale afin d'avoir une variation de capacité maximale.

Sur la figure 6A, la liaison pivot 318 du bras de détection 316 est située à l'intérieur du cadre de la masse d'excitation 306 du côté des moyens de couplage 302, le bras de détection 316 s'étendant de part et d'autre de la masse inertielle 310. Les électrodes 320 sont disposées à l'opposé de la liaison pivot 318 par rapport à la partie inertielle 310 et entourent l'extrémité libre de la poutre 316.

En variante, une seule électrode pourrait être utilisée, mais comme pour les jauges piézorésistives, un montage différentiel permet de s'affranchir des variations de température.

Une centrale inertielle dans laquelle les éléments de détection sont reliés au support par des liaisons mécaniques autres qu'une liaison pivot ne sort pas du cadre de la présente invention. En outre, comme cela est illustré par la centrale de la figure 6B, aucune liaison mécanique directe entre les éléments de détection et le support ne sont prévus, notamment dans le cas d'un élément de détection de type capacitif.

Sur la figure 6B, on peut voir un autre exemple de réalisation d'une centrale inertielle mettant en oeuvre des moyens de détection de type capacitif.

La centrale de la figure 6B se distingue de celle de la figure 6A, en ce que l'élément de détection 316' et la masse inertielle 310'sont confondus de sorte à former un ensemble d'un seul tenant. La masse inertielle 310' est suspendue à l'intérieur de la masse d'excitation 306'. Le bras de détection 316' forme une des électrodes des moyens de détection capacitifs 311'. Dans cet exemple, le bras de détection 316' n'est directement relié mécaniquement au support.

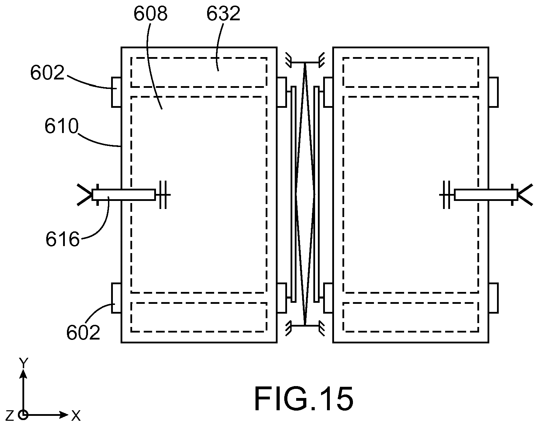

Sur la figure 15, on peut voir un autre exemple de réalisation d'une centrale inertielle capable dans laquelle la masse d'excitation est mise en mouvement dans la direction Z, et l'accélération est détectée suivant l'axe Y et la vitesse de rotation est détectée suivant l'axe X.

Dans cet exemple de réalisation, la masse inertielle et la masse d'excitation sont confondues et sont désignées 610, l'élément de détection est formé par un bras 616. En pointillées sont représentées l'électrode d'excitation 608 située sous la masse d'excitation dans une partie centrale de celle-ci et les électrodes de détection 632 de l'excitation situées sous la masse d'excitation de part et d'autre de l'électrode d'excitation. Des ressorts de guidage 602 le long de la direction Z sont prévus, ceux-ci présentent une certaine souplesse le long de la direction Z et une certaine raideur le long des directions X et Y.

Dans cet exemple de réalisation, l'excitation se fait directement sur la masse d'inertie.

On obtient alors une mesure de la vitesse de rotation modulée à la fréquence d'excitation et une mesure de l'accélération non modulée.

La présente invention permet de réaliser une centrale inertielle apte à mesurer une accélération dans le plan et une vitesse de rotation hors-plan et une centrale inertielle apte à mesurer une accélération hors-plan et une vitesse de rotation dans le plan. Il est alors possible de réaliser des systèmes de détection aptes à mesurer des accélérations dans au moins deux directions de l'espace et des vitesses de rotation selon au moins deux directions de l'espace.

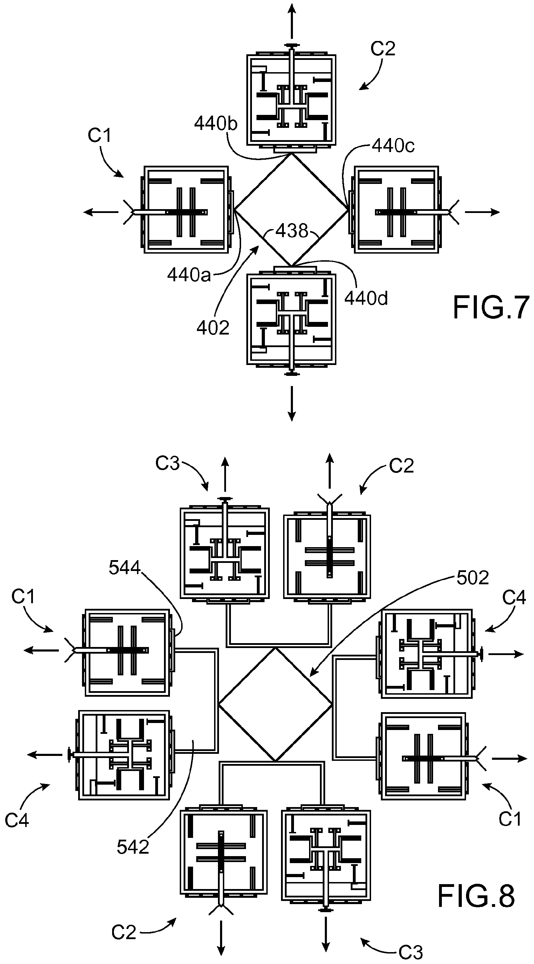

Sur la figure 7, on peut voir un exemple de réalisation d'un système de détection apte à détecter une accélération aY le long de la direction Y, une accélération hors-plan aZ, une vitesse de rotation hors plan ΩZ et une vitesse de rotation dans le plan ΩX.

Le système de détection de la figure 7 comporte deux capteurs C1, C2 selon l'invention.

Les moyens de couplage 402 sont communs aux deux capteurs C1 et C2, et assure un couplage mécanique en opposition de phase.

Dans l'exemple représenté, les moyens de couplage mécanique 2 sont formés par une structure de quatre poutres 438 formant un losange dont chaque sommet 440a à 440d est relié à une structure d'un capteur.

Le capteur C1 permet de détecter une accélération aY le long de la direction Y, une vitesse de rotation hors plan ΩZ. Dans l'exemple représenté, il est similaire à celui de la figure 2. Le capteur C2 permet de détecter une accélération hors plan aZ et une vitesse de rotation dans le plan ΩX. Dans l'exemple représenté, il est similaire à celui de la figure 4. Les moyens d'excitation ne sont pas représentés, mais ils sont similaires à ceux décrits en relation avec la figure 1.

Lors du fonctionnement du système de détection, les deux parties d'excitation des capteurs C1 et C2 sont mises en mouvement, mais une seule boucle d'excitation est requise.

Le dispositif ci-dessus permet donc de mesurer l'accélération selon Y et Z et la vitesse de rotation selon X et Z tout en ayant une seule boucle d'excitation.

Le ressort de couplage en losange permet de minimiser à la fois l'électronique d'excitation, puisqu'une seule boucle d'excitation est mise en oeuvre, et la surface du dispositif.

Toutes les mesures sont faites dynamiquement c'est-à-dire que le signal à détecter est modulé à la fréquence d'excitation. En effet le signal mesuré sur les quatre paires de jauges sera identique en termes de spectre fréquentiel et de d'information.

De préférence, le système est dimensionné de manière à obtenir les fréquences de résonances du système d'excitation et des systèmes de détection les plus proches les unes des autres que possible. Le système offre à cette fréquence les réponses les plus importantes, ce qui permet d'optimiser la sensibilité du dispositif.

Sur la figure 8, on peut voir un système de détection apte à détecter les accélérations selon les trois directions de l'espace, ainsi que les vitesses de rotation dans les trois directions de l'espace.

Le système de détection comporte quatre capteurs couplés mécaniquement par un moyen de couplage 502 similaire à celui de la figure 7.

Chaque sommet est lié à deux structures de deux capteurs différents. Pour cela, les deux structures sont reliées à une poutre 542 par des moyens élastiques 544, la poutre étant connectée au sommet du losange.

Dans l'exemple représenté, les structures de chaque capteur sont disposées de telle sorte qu'elles ne sont pas situées du même côté de la diagonale du losange reliant les sommets auxquels elles sont reliées, mais cette disposition n'est pas limitative.

Les flèches symbolisent les mouvements d'excitation. Le capteur C1 mesure aY et ΩZ, le capteur C2 mesure aX et ΩZ, le capteur C3 mesure aZ et ΩX et le capteur C4 mesure aZ et ΩY.

On mesure bien les accélérations et les vitesses de rotation selon les trois directions. On notera une redondance dans la mesure des accélérations et vitesses de rotation hors-plan.

Dans ce système de détection également, une seule boucle d'excitation est requise, l'électronique d'excitation est donc réduit, ainsi que la consommation d'énergie.

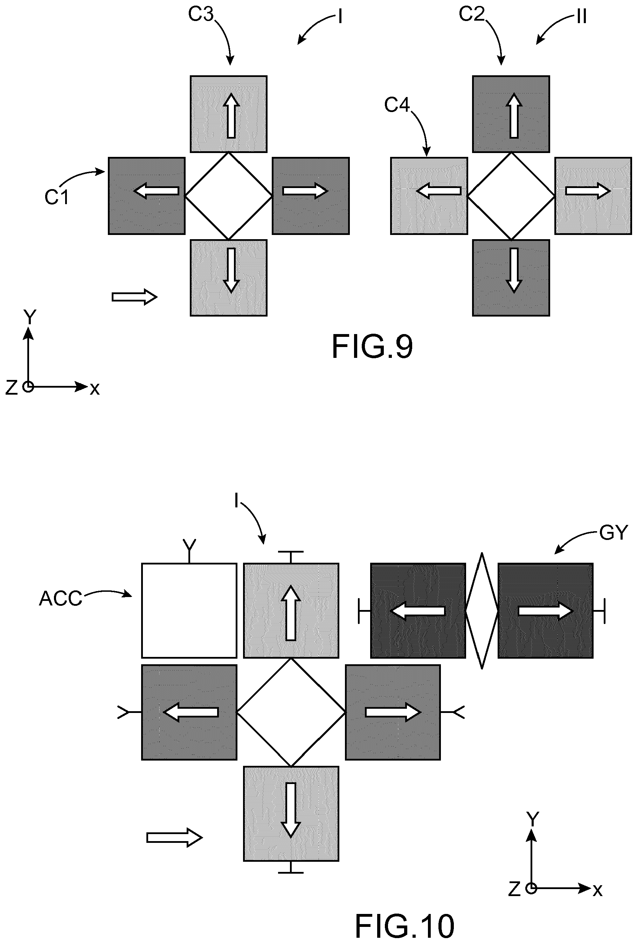

Sur la figure 9, on peut voir un autre exemple de réalisation d'un système de détection permettant des accélérations et des vitesses de rotation selon les trois directions.

Le système de détection comporte deux systèmes permettant des mesures d'accélération dans deux directions différentes et deux vitesses de rotation selon deux directions différentes de sorte à avoir les mesures dans les trois directions.

Le système I couple un capteur C1 de aY et de ΩZ et un capteur C3 de aZ et de ΩX.

Le système II couple un capteur C2 de aX et de ΩZ et un capteur C4 de aZ et de ΩY.

Les deux systèmes sont orientés l'un par rapport de sorte que l'axe d'un capteur d'un de systèmes mesurant une accélération dans le plan par exemple aY soit orthogonal à l'axe du capteur de l'autre système mesurant l'autre accélération dans le plan aX.

Sur la figure 10, on peut voir un autre exemple de réalisation d'un système de détection des accélérations et des vitesses de rotation selon les trois directions offrant un encombrement réduit en terme de surface.

Le système de détection de la figure 10 comporte l'un des systèmes de détection de la figure 9, un accéléromètre ACC mesurant l'accélération dans la direction manquante et un gyromètre GY mesurant une vitesse de rotation selon la direction manquante.

Le système de détection similaire au système I de la figure 9 mesure aY, aZ, ΩZ et ΩX, l'accéléromètre ACC mesure aX, et le gyromètre GY mesure ΩY.

Les flèches symbolisent la direction de l'excitation.

L'accéléromètre peut être de type passif, ou de type dynamique, avec une boucle d'excitation.

Le gyromètre est de type connu par l'homme du métier

Ce système de détection met donc en oeuvre au moins deux boucles d'excitation, une boucle d'excitation pour le système I et une boucle d'excitation pour le gyromètre, éventuellement une troisième dans le cas d'un accéléromètre dynamique.

Nous allons maintenant décrire un exemple de traitement des signaux délivrés par les jauges dans le cas d'une détection piézoélectrique.

Les jauges piézorésistives d'un point de vue électrique peuvent être considérées comme des résistances dont la valeur est modulée et qui varient avec l'intensité des grandeurs physiques mesurées.

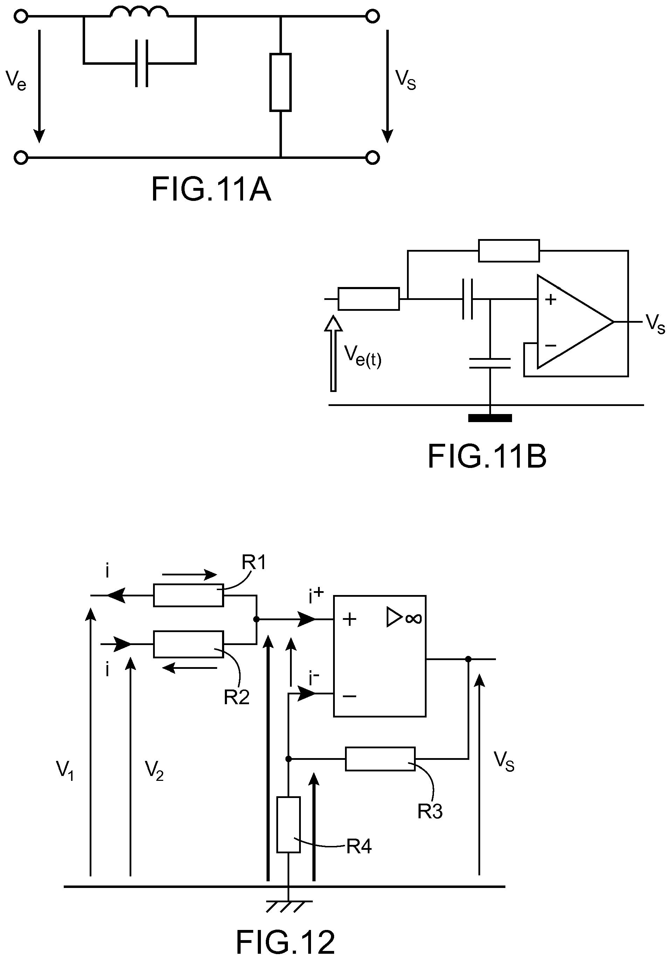

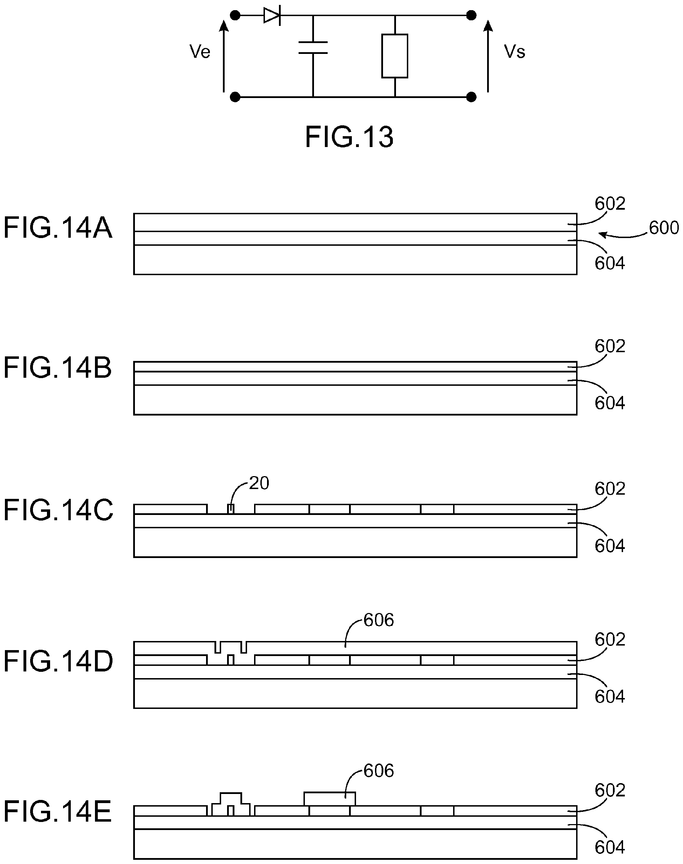

Dans une première étape de traitement, les signaux émis par les jauges subissent une étape de démodulation, les signaux étant tous modulés à la même fréquence, la fréquence d'excitation. Cette étape de démodulation peut être effectuée par un filtre dédié tel que le filtre passe-bande passif sur la figure 11A ou tel que le filtre passe-bande actif de la figure 11B, ou par un instrument de mesure tel qu'un lock-in amplifier par exemple un SR830. Pour les filtres ayant des sélectivités importantes, seule une faible bande passante incluant la fréquence de la porteuse du signal sera transmise. La composante haute fréquence est ensuite filtrée à l'aide d'un détecteur d'enveloppe, formée par exemple par une diode couplée à un passe-bas (figure 13). Ve et Vs sont les tensions d'entrée et de sortie respectivement.

Avantageusement, préalablement à cette première étape, les signaux sont amplifiés.

Lors d'une étape suivante, dans le cas de l'accélération, les signaux fournis par les ponts de jauges sont additionnés permettant d'obtenir un signal d'amplitude proportionnelle à l'accélération.

Dans le cas de la vitesse de rotation, les signaux fournis par les ponts de jauges sont soustraits permettant d'obtenir un signal d'amplitude proportionnelle à la vitesse de rotation.

Sur la figure 12, on peut voir un exemple de schéma électrique d'un montage sommateur non inverseur effectuant l'addition ou la soustraction des signaux des milieux de pont.

L'unité de commande et traitement comporte donc des moyens de démodulation du signal et des moyens de sommations des signaux démodulés. De préférence, l'unité de commande comporte également des moyens d'amplification des signaux préalablement à leur démodulation.

Une telle centrale est avantageusement réalisée sous la forme d'un système microélectromécanique et/ou nanoélectromécanique avec les techniques de la microélectronique.

Nous allons maintenant décrire un exemple d'un tel procédé de réalisation d'une centrale inertielle à excitation électrostatique et à détection piézoélectrique à l'aide des figures 14A à 14I.

On utilise un substrat SOI 600 (« Silicium on oxide »), comportant une épaisseur typique de silicium 602 en face avant comprise entre 5 µm et 100 µm et une épaisseur typique d'oxyde enterré 604 comprise entre 0,5µm et 5µm (figure 14A).

Lors d'une première étape, on effectue un amincissement de la couche de silicium 602 jusqu'à environ 400 nm, la couche 604 ayant une épaisseur de 1µm. L'élément ainsi obtenu est représenté sur la figure 14A.

Lors d'une étape suivante, on effectue une implantation de dopants dans la couche 602 et une homogénéisation des dopants sur toute l'épaisseur du silicium de la couche 602 par un recuit, par exemple à 1050°C pendant 5 min.

L'élément ainsi obtenu est représenté sur la figure 14B.

On effectue ensuite un amincissement de la couche de silicium 602 jusqu'à environ 250 nm.

Lors d'une étape suivante, on réalise une lithographie de la couche 602 pour définir les jauges 20. On effectue une gravure de la couche 602 avec arrêt sur la couche d'oxyde 604. On effectue ensuite une étape de retrait du masque de lithographie.

L'élément ainsi obtenu est représenté sur la figure 14C.

Lors d'une étape suivante, on réalise une couche de protection des jauges par exemple par un dépôt de SiO₂ 606 de 250nm d'épaisseur, par exemple par plasma haute densité (ou HDP "High density plasma")

L'élément ainsi obtenu est représenté sur la figure 14D.

Lors d'une étape suivante, on réalise la lithographie, dite du niveau de protection. On effectue ensuite une gravure de la couche 606 SiO₂ avec un arrêt sur la couche 602. On effectue ensuite une étape de retrait du masque de lithographie. On utilisera une gravure anisotrope à base de bombardement d'ion issu d'un gaz fluoré.

L'élément ainsi obtenu est représenté sur la figure 14E.

Lors d'une étape suivante, on dépose une couche de Si 608 par épitaxie de 20 µm, de préférence on réalise quatre couches de 5 µm chacune. Une étape de polissage mécano-chimique a ensuite lieu.

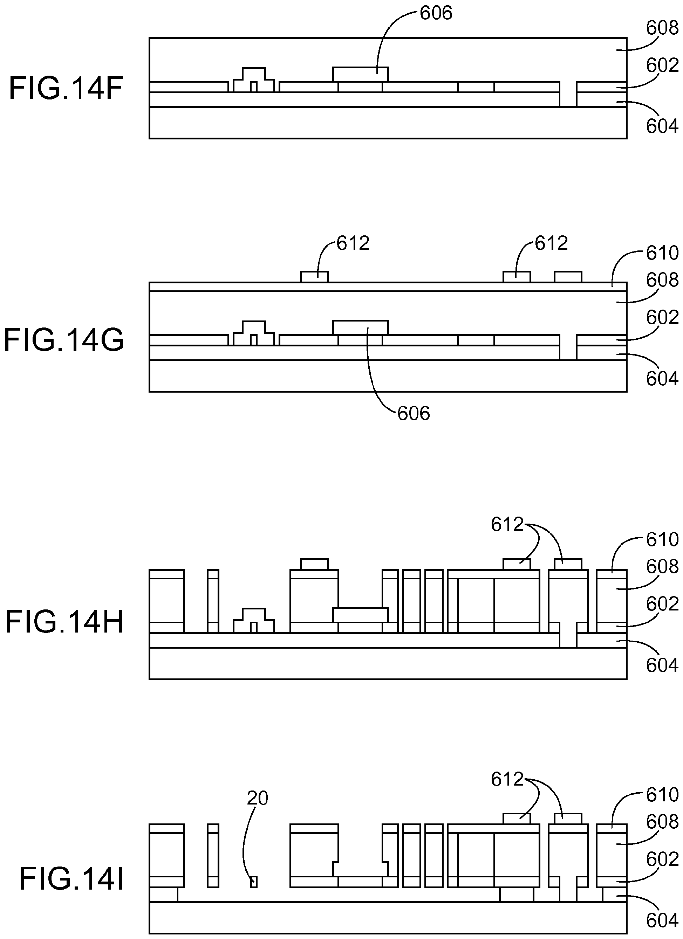

L'élément ainsi obtenu est représenté sur la figure 14F.

Lors d'une étape suivant, on réalise une étape d'implantation de dopant de la face avant 610 de la couche 608 et d'homogénéisation par recuit.

Ensuite pour former les contacts électriques, un dépôt d'une couche métallique 612 par exemple de AISi de 650 nm. On réalise ensuite une gravure de la couche 612. On effectue ensuite une étape de retrait du masque de lithographie.

L'élément ainsi obtenu est représenté sur la figure 14G.

Lors d'une étape suivante, on effectue une lithographie pour définir les masses, et on grave la couche 608 par exemple par gravure profonde par ions réactifs (DRIE : deep reactive-ion etching en terminologie anglo-saxonne). On retire ensuite le masque de lithographie.

L'élément ainsi obtenu est représenté sur la figure 14H.

Lors d'une dernière étape, on libère les structures par exemple avec de l'acide fluorhydrique au temps.

La centrale inertielle selon l'invention ainsi obtenu est représentée sur la figure 14I.

La présente invention offre une centrale inertielle apte à mesurer une accélération et une vitesse de rotation de faible encombrement, performante et à fonctionnement simplifié.

## Revendications

1. Dispositif de détection d'une accélération dans au moins une direction et d'une vitesse de rotation autour d'au moins une autre direction, comportant un support (4) et au moins deux structures (S1, S101, S201, 5301, S2, S102, 5202, 5302) couplées mécaniquement l'une à l'autre en opposition de phase, lesdites structures (S1, S101, S201, S301, S2, S102, S202, S302) étant suspendues par rapport au support (4), chacune des structures (S1, S101, S201, S301, S2, S102, S202, S302) comportant :
- une masse d'excitation (6, 106, 206, 306),
- des moyens d'excitation (8, 108, 208) aptes à mettre en mouvement ladite masse d'excitation dans une direction donnée dite direction d'excitation,
- une masse inertielle (10, 110, 210, 310) solidaire mécaniquement de la masse d'excitation,
- un élément de détection (16, 116, 216, 316) relié à la masse inertielle (10, 110, 210, 310) de sorte à être déplacé par celle-ci, ledit élément de détection étant articulé sur le support (4) au moyen d'une articulation pivot et relié à la masse inertielle (10, 110, 210, 310) par des moyens élastiques,
- des moyens de détection (20,120, 320) du déplacement de ladite masse inertielle dans une direction donnée dite direction de détection, et
- une unité de commande des moyens d'excitation et de traitement des signaux délivrés par les moyens de détection.

2. Dispositif de détection selon la revendication 1, dans lequel l'élément de détection comporte une première portion (716.1, 816.1) et une deuxième portion (816.1, 816.2) connectées par une liaison pivot (734, 834), la première portion (716.1, 816.1) étant articulée sur le support par la liaison pivot et la deuxième portion (816.1, 816.2) étant connectée à la masse inertielle par les moyens élastiques, la liaison pivot entre les première et deuxième portions présentant un axe parallèle à celui de la liaison pivot entre le support et la première portion.

3. Dispositif de détection selon la revendication 1 ou 2, dans lequel chaque masse inertielle et l'élément de détection associé sont reliés de façon à transmettre majoritairement les mouvements selon la direction de détection à l'élément de détection, lesdites masses inertielles (10, 110, 310) étant destinées à se déplacer selon une direction contenue dans un plan moyen du dispositif de détection contenant les directions (X) et (Y), la liaison pivot entre l'élément de détection et le support (4) étant avantageusement formée par deux poutres flexibles dans le plan, fixées par une extrémité sur le support en deux point distincts et par une autre extrémité sur l'élément de détection et définissant l'axe de pivot à l'intersection de l'axe des poutres flexibles.

4. Dispositif de détection selon la revendication 1 ou 2, dans lequel chaque masse d'inertie et l'élément de détection associé sont reliés de façon à transmettre majoritairement les mouvements dans la direction de détection à l'élément de détection, lesdites masses inertielles (210) étant destinées à se déplacer selon une direction perpendiculaire à un plan moyen du dispositif de détection, la liaison pivot entre l'élément de détection et ie support (4) étant avantageusement une liaison pivot hors plan formée par une poutre fixée d'une part à l'élément de détection et d'autre part par deux extrémités au support.

5. Dispositif de détection selon l'une des revendications 1 à 4, comportant des moyens élastiques ancrés sur le support et reliés à l'élément de détection.

6. Dispositif de détection selon l'une des revendications 1 à 5, dans lequel pour chaque structure, la masse inertielle et l'élément de détection ou la masse inertielle et la masse d'excitation sont confondus.

7. Dispositif de détection selon l'une des revendications 1 à 6, dans lequel les deux structures, (S101, S201, 5301, S2, 5102, 5202, 5302) sont couplées mécaniquement en opposition de phase par une liaison en forme de losange (2, 102, 202, 302), lesdites structures étant reliées à deux sommets opposés de la liaison en forme de losange.

8. Dispositif de détection selon l'une des revendications 1 à 7, dans lequel chaque masse d'excitation (6, 106, 306) a la forme d'un cadre à l'intérieur duquel est suspendue la masse inertielle (10, 110, 310) et dans lequel l'élément de détection (16, 316, 216) est un bras relié à la masse inertielle.

9. Dispositif de détection selon l'une des revendications 1 à 8, dans lequel les moyens de détection comportent au moins une jauge piézorésistive (20, 120) reliée à l'élément de détection, avantageusement deux jauges piézorésistives (20, 120) montées en différentiel.

10. Dispositif de détection selon l'une des revendications 1 à 8, dans lequel les moyens de détection sont de type capacitif, et comportent au moins une électrode (320), l'élément de détection (316) formant avec ladite électrode un condensateur à capacité variable, lesdits moyens de détection comportant avantageusement deux électrodes (320) entre lesquelles est logée l'élément de détection (316), l'élément de détection formant avec chacune desdites électrodes un condensateur à capacité variable, lesdits moyens de détection capacitifs (311) étant de préférence situés à l'opposé de la liaison pivot par rapport à la masse inertielle.

11. Dispositif de détection selon l'une des revendications 1 à 10, dans lequel les moyens d'excitation (8, 208) sont de type électrostatiques comportant au moins une paire de peignes interdigités (8.1, 208.1, 8.2, 208.2) par masse d'excitation, un peigne (8.1, 208.1) étant sur le support (4) et un autre peigne (8.2, 208.2) étant solidaire de la masse d'excitation.

12. Dispositif de détection selon l'une des revendications 1 à 11, étant un système microélectromécanique et/ou un système nanoélectromécanique.

13. Dispositif de détection selon l'une des revendications 1 à 12, dans lequel l'unité de commande des moyens d'excitation et de traitement des signaux délivrés par les moyens de détection comporte des moyens de démodulation desdits signaux et des moyens de sommation et de soustraction desdits signaux démodulés, l'unité de commande et de traitement comportant avantageusement également des moyens d'amplification desdits signaux.

14. Système de détection d'accélérations dans deux directions différentes et de vitesse de rotation selon deux directions différentes, comportant au moins deux dispositifs de détection selon l'une des revendications 1 à 13.

15. Système de détection selon la revendication 14, dans lequel les moyens de couplage (402) mécanique en opposition de phase sont communs aux deux dispositifs de détection, lesdits moyens de couplage mécanique en opposition de phase (4.2) étant avantageusement formés par quatre poutres (432) assemblées en losange, les deux structures de chaque dispositif étant reliées au losange au niveau de deux sommets situés sur la même diagonale du losange.

16. Système de détection d'accélérations dans trois directions différentes et de vitesse de rotation selon trois directions différentes, comportant deux systèmes de détection (I, II) selon la revendication 14 ou 15, lesdits systèmes étant orientés l'un par rapport à l'autre de sorte que les accélérations dans les trois directions et les vitesses de rotation selon les trois directions soient détectées.

17. Système de détection d'accélérations dans trois directions différentes et de vitesse de rotation selon trois directions différentes, comportant quatre dispositifs de détection selon l'une des revendications 1 à 13.

18. Système de détection d'accélérations dans trois directions différentes et de vitesse de rotation selon trois directions différentes selon la revendication 17, dans laquelle les moyens de couplage mécanique en opposition de phase (502) sont communs aux quatre dispositifs de détection, lesdits moyens de couplage mécanique en opposition de phase (502) étant avantageusement formés par quatre poutres disposées en losange, deux structures de deux dispositifs de détection différents étant reliées à un sommet du losange, les deux structures d'un même dispositif étant reliées à deux sommets situés sur la même diagonale du losange.

19. Système de détection d'accélérations dans trois directions différentes et de vitesse de rotation selon trois directions différentes, comportant un système de détection selon la revendication 14 ou 15 et en outre un accéléromètre (ACC) et un gyromètre (GY).

## Patentansprüche

1. Vorrichtung zur Erfassung einer Beschleunigung in wenigstens einer Richtung und einer Drehgeschwindigkeit um wenigstens eine andere Richtung, umfassend einen Träger (4) und wenigstens zwei Strukturen (S1, S101, S201, S301, S2, S102, S202, S302), die mechanisch miteinander in Phasengegensatz gekoppelt sind, wobei die Strukturen (S1, S101, S201, S301, S2, S102, S202, S302) bezüglich des Trägers (4) aufgehängt sind, wobei jede der Strukturen (S1, S101, S201, S301, S2, S102, S202, S302) umfasst:
- eine Erregungsmasse (6, 106, 206, 306),
- Erregungsmittel (8, 108, 208), die dazu ausgelegt sind, die Erregungsmasse in einer gegebenen Richtung, genannt Erregungsrichtung, in Bewegung zu versetzen,
- eine Trägheitsmasse (10, 110, 210, 310), die mechanisch mit der Erregungsmasse verbunden ist,
- ein Erfassungselement (16, 116, 216, 316), das mit der Trägheitsmasse (10, 110, 210, 310) derart verbunden ist, dass es durch diese verlagert wird, wobei das Erfassungselement an dem Träger (4) mittels eines Schwenkgelenks angelenkt ist und mit der Trägheitsmasse (10, 110, 210, 310) durch elastische Mittel verbunden ist,
- Mittel (20, 120, 320) zur Erfassung der Verlagerung der Trägheitsmasse in einer gegebenen Richtung, genannt Erfassungsrichtung, und
- eine Einheit zur Steuerung der Erregungsmittel und zur Verarbeitung der durch die Erfassungsmittel gelieferten Signale.

2. Erfassungsvorrichtung nach Anspruch 1, wobei das Erfassungselement eine erste Teil (716.1, 816.1) und eine zweite Teil (816.1, 816.2) umfasst, die durch eine Schwenkverbindung (734, 834) verbunden sind, wobei die erste Teil (716.1, 816.1) an dem Träger durch die Schwenkverbindung angelenkt ist, und die zweite Teil (816.1, 816.2) an der Trägheitsmasse durch die elastischen Mittel angeschlossen ist, wobei die Schwenkverbindung zwischen der ersten und der zweiten Teil eine Achse aufweist, die parallel ist zu jener der Schwenkverbindung zwischen dem Träger und der ersten Teil.

3. Erfassungsvorrichtung nach Anspruch 1 oder 2, wobei jede Trägheitsmasse und das zugeordnete Erfassungselement derart verbunden sind, dass hauptsächlich die Bewegungen entlang der Erfassungsrichtung zum Erfassungselement übertragen werden, wobei die Trägheitsmassen (10, 110, 310) dazu ausgelegt sind, sich entlang einer Richtung zu verlagern, die in einer mittleren Ebene der Erfassungsvorrichtung enthalten ist, die die Richtungen (X) und (Y) enthält, wobei die Schwenkverbindung zwischen dem Erfassungselement und dem Träger (4) vorzugsweise durch zwei in der Ebene flexible Balken gebildet ist, die an einem Ende an dem Träger an zwei verschiedenen Punkten befestigt sind und an einem anderen Ende an dem Erfassungselement, und die Schwenkachse am Schnitt der Achse der flexiblen Balken definieren.

4. Erfassungsvorrichtung nach Anspruch 1 oder 2, wobei jede Trägheitsmasse und das zugeordnete Erfassungselement derart verbunden sind, dass hauptsächlich die Bewegungen in der Erfassungsrichtung zum Erfassungselement übertragen werden, wobei die Trägheitsmassen (210) dazu ausgelegt sind, sich entlang einer Richtung orthogonal zu einer mittleren Ebene der Erfassungsvorrichtung zu verlagern, wobei die Schwenkverbindung zwischen dem Erfassungselement und dem Träger (4) vorzugsweise eine Schwenkverbindung außerhalb der Ebene ist, gebildet durch einen Balken, der einerseits am Erfassungselement befestigt ist und andererseits an zwei Enden am Träger.

5. Erfassungsvorrichtung nach einem der Ansprüche 1 bis 4, umfassend elastische Mittel, die an dem Träger verankert und mit dem Erfassungselement verbunden sind.

6. Erfassungsvorrichtung nach einem der Ansprüche 1 bis 5, wobei für jede Struktur die Trägheitsmasse und das Erfassungselement oder die Trägheitsmasse und die Erregungsmasse zusammengenommen sind.

7. Erfassungsvorrichtung nach einem der Ansprüche 1 bis 6, wobei die zwei Strukturen (S101, S201, S301, S2, S102, S202, S302) mechanisch in Phasengegensatz durch eine Verbindung in Rautenform (2, 102, 202, 302) gekoppelt sind, wobei die Strukturen mit zwei entgegengesetzten Spitzen der Verbindung in Rautenform verbunden sind.

8. Erfassungsvorrichtung nach einem der Ansprüche 1 bis 7, wobei jede Erregungsmasse (6, 106, 306) die Form eines Rahmens hat, in dessen Innerem die Trägheitsmasse (10, 110, 310) aufgehängt ist, und wobei das Erfassungselement (16, 316, 216) ein Arm ist, der mit der Trägheitsmasse verbunden ist.

9. Erfassungsvorrichtung nach einem der Ansprüche 1 bis 8, wobei die Erfassungsmittel wenigstens ein Piezowiderstands-Messelement (20, 120) umfassen, das mit dem Erfassungselement verbunden ist, vorzugsweise zwei Piezowiderstands-Messelemente (20, 120), die differentiell montiert sind.

10. Erfassungsvorrichtung nach einem der Ansprüche 1 bis 8, wobei die Erfassungsmittel vom kapazitiven Typ sind und wenigstens eine Elektrode (320) umfassen, wobei das Erfassungselement (316) mit der Elektrode einen Kondensator mit variabler Kapazität bildet, wobei die Erfassungsmittel vorzugsweise zwei Elektroden (320) umfassen, zwischen denen das Erfassungselement (316) untergebracht ist, wobei das Erfassungselement mit jeder der Elektroden einen Kondensator mit variabler Kapazität bildet, wobei die kapazitiven Erfassungsmittel (311) vorzugsweise entgegengesetzt der Schwenkverbindung bezogen auf die Trägheitsmasse angeordnet sind.

11. Erfassungsvorrichtung nach einem der Ansprüche 1 bis 10, wobei die Erregungsmittel (8, 208) vom elektrostatischen Typ sind und wenigstens ein Paar von durch die Erregungsmasse interdigitierten Kämmen (8.1, 208.1, 8.2, 208.2) umfassen, wobei ein Kamm (8.1, 208.1) an dem Träger (4) ist, und ein anderer Kamm (8,2, 208.2) mit der Erregungsmasse verbunden ist.

12. Erfassungsvorrichtung nach einem der Ansprüche 1 bis 11, die ein mikroelektromechanisches System und/oder ein nanoelektromechanisches System ist.

13. Erfassungsvorrichtung nach einem der Ansprüche 1 bis 12, wobei die Einheit zur Steuerung der Erregungsmittel und zur Verarbeitung der Signale, die durch die Erfassungsmittel geliefert werden, Mittel zur Demodulation der Signale und Mittel zum Summieren und zum Subtrahieren der demodulierten Signale umfasst, wobei die Einheit zur Steuerung und zur Verarbeitung vorzugsweise ferner Mittel zur Verstärkung der Signale umfasst.

14. System zur Erfassung von Beschleunigungen in zwei verschiedenen Richtungen und einer Drehgeschwindigkeit in zwei verschiedenen Richtungen, umfassend wenigstens zwei Erfassungsvorrichtungen nach einem der Ansprüche 1 bis 13.

15. Erfassungssystem nach Anspruch 14, wobei die Mittel (402) zur mechanischen Kopplung in Phasengegensatz den zwei Erfassungsvorrichtungen gemeinsam sind, wobei die Mittel zur mechanischen Kopplung in Phasengegensatz (4.2) vorzugsweise durch vier als Raute angeordnete Balken (432) gebildet sind, wobei die zwei Strukturen jeder Vorrichtung mit der Raute im Bereich von zwei Spitzen verbunden sind, die auf der gleichen Diagonale der Raute liegen.

16. System zur Erfassung von Beschleunigungen in drei verschiedenen Richtungen und einer Drehgeschwindigkeit in drei verschiedenen Richtungen, umfassend zwei Erfassungssysteme (I, II) nach Anspruch 14 oder 15, wobei die Systeme relativ zueinander derart orientiert sind, dass die Beschleunigungen in den drei Richtungen und die Drehgeschwindigkeiten in den drei Richtungen erfasst werden.

17. System zur Erfassung von Beschleunigungen in drei verschiedenen Richtungen und einer Drehgeschwindigkeit in drei verschiedenen Richtungen, umfassend vier Erfassungsvorrichtungen nach einem der Ansprüche 1 bis 13.

18. System zur Erfassung von Beschleunigungen in drei verschiedenen Richtungen und einer Drehgeschwindigkeit in drei verschiedenen Richtungen nach Anspruch 17, wobei die Mittel zur mechanischen Kopplung in Phasengegensatz (502) den vier Erfassungsvorrichtungen gemeinsam sind, wobei die Mittel zur mechanischen Kopplung in Phasengegensatz (502) vorzugsweise durch vier als Raute angeordnete Balken gebildet sind, wobei zwei Strukturen von zwei verschiedenen Erfassungsvorrichtungen mit einer Spitze der Raute verbunden sind, wobei die zwei Strukturen ein und derselben Vorrichtung mit zwei Spitzen verbunden sind, die auf der gleichen Diagonale der Raute liegen.

19. System zur Erfassung von Beschleunigungen in drei verschiedenen Richtungen und einer Drehgeschwindigkeit in drei verschiedenen Richtungen, umfassend ein Erfassungssystem nach Anspruch 14 oder 15 und ferner ein Akzelerometer (ACC) und ein Gyrometer (GY).

## Claims

1. A device for detecting an acceleration in at least one direction and a speed of rotation around at least one other direction, comprising a support (4) and at least two structures (S1, S101, S201, S301, S2, S102, S202, S302) mechanically coupled to each other in opposite phase, said structures (S1, S101, S201, S301, S2, S102, S202, S302) being suspended relative to the support (4), each of the structures (S1, S101, S201, S301, S2, S102, S202, S302) comprising:
- an excitation mass (6, 106, 206, 306),
- excitation means (8, 108, 208) able to move said excitation mass in a given direction called a direction of excitation,
- an inertial mass (10, 110, 210, 310) mechanically integral with the excitation mass,
- a detecting element (16, 116, 216, 316) connected to the inertial mass (10, 110, 210, 310) so as to be displaced by the inertial mass, said detecting element being hinged to the support (4) by means of a pivot hinge and connected to the inertial mass (10, 110, 210, 310) by elastic means,
- means (20, 120, 320) for detecting the displacement of said inertial mass in a given direction called a direction of detection, and
- a unit for controlling the excitation means and processing signals delivered by the detecting means.

2. The detecting device according to claim 1, wherein the detecting element comprises a first portion (716.1, 816.1) and a second portion (816.1, 816.2) which are connected by a pivot connection (734, 834), the first portion (716.1, 816.1) being hinged to the support by the pivot connection and the second portion (816.1, 816.2) being connected to the inertial mass by the elastic means, the pivot connection between the first and second portions having an axis parallel to that of the pivot connection between the support and the first portion.

3. The detecting device according to claim 1 or 2, wherein each inertial mass and the detecting element associated therewith are connected so as to mostly transmit movements along the direction of detection to the detecting element, said inertial masses (10, 110, 310) being intended to be displaced along a direction contained in a neutral plane of the detecting device containing the directions (X) and (Y), the pivot connection between the detecting element and the support (4) being advantageously formed by two flexible beams in the plane, attached by one end to the support at two distinct points and by another end to the detecting element and defining the pivot axis at the intersection of the axis of the flexible beams.

4. The detecting device according to claim 1 or 2, wherein each inertial mass and the detecting element associated therewith are connected so as to mostly transmit movements in the direction of detection to the detecting element, said inertial masses (210) being intended to be displaced along a direction perpendicular to a neutral plane of the detecting device, the pivot connection between the detecting element and the support (4) being advantageously an out-of-plane pivot connection formed by a beam attached on the one hand to the detecting element and on the other hand by two ends to the support.

5. The detecting device according to one of claims 1 to 4, comprising elastic means anchored to the support and connected to the detecting element.

6. The detecting device according to one of claims 1 to 5, wherein for each structure, the inertial mass and the detecting element or the inertial mass and the excitation mass are the same.

7. The detecting device according to one of claims 1 to 6, wherein both structures (S101, S201, S301, S2, S102, S202, S302) are mechanically coupled in opposite phase by a rhomb-shaped connection (2, 102, 202, 302), said structures being connected at two opposite vertices of said rhomb-shaped connection.

8. The detecting device according to one of claims 1 to 7, wherein each excitation mass (6, 106, 306) is in the shape of a frame inside which is suspended the inertial mass (10, 110, 310) and wherein the detecting element (16, 316, 216) is an arm connected to the inertial mass.

9. The detecting device according to one of claims 1 to 8, wherein the detecting means comprise at least one piezoresistive gauge (20, 120) connected to the detecting element, advantageously two piezoresistive gauges (20, 120) mounted as a differential.

10. The detecting device according to one of claims 1 to 8, wherein the detecting means are of the capacitive type, and comprise at least one electrode (320), the detecting element (316) forming with said electrode a variable capacitor, said detecting means comprising advantageously two electrodes (320) between which is accommodated the detecting element (316), the detecting element forming with each of said electrodes a variable capacitor, the capacitive detecting means (311) being preferably located opposite the pivot connection with respect to the inertial mass.

11. The detecting device according to one of claims 1 to 10, wherein the excitation means (8, 208) are of the electrostatic type comprising at least one pair of interdigitated combs (8.1, 208.1, 8.2, 208.2) per excitation mass, a comb (8.1, 208.1) being on the support (4) and another comb (8.2, 208.2) being integral with the excitation mass.

12. The detecting device according to one of claims 1 to 11, being a microelectromechanical system and/or a nanoelectromechanical system.

13. The detecting device according to one of claims 1 to 12, wherein the unit for controlling the excitation means and processing the signals delivered by the detecting means comprises means for demodulating said signals and means for summing and subtracting said demodulated signals, the controlling and processing unit also advantageously comprising means for amplifying said signals.

14. A system for detecting accelerations in two different directions and a speed of rotation along two different directions, comprising at least two detecting devices according to one of claims 1 to 13.

15. The detecting system according to claim 14, wherein the opposite phase mechanical coupling means (402) are common to both detecting devices, the opposite phase mechanical coupling means (4.2) being advantageously formed by four beams (432) assembled as a rhomb, both structures of each device being connected to the rhomb at two vertices located on the same diagonal of the rhomb.

16. The system for detecting accelerations in three different directions and a speed of rotation along three different directions, comprising two detecting systems (I, II) according to 14 or 15, said systems being oriented with respect to each other such that the accelerations in the three directions and the speeds of rotation along the three directions are detected.

17. The system for detecting accelerations in three different directions and a speed of rotation along three different directions, comprising four detecting devices according to one of claims 1 to 13.

18. The system for detecting accelerations in three different directions and a speed of rotation along three different directions according to claim 17, wherein the opposite phase mechanical coupling means (502) are common to the four detecting devices, said opposite phase mechanical coupling means (502) being advantageously formed by four beams arranged as a rhomb, two structures of two different detecting devices being connected to a vertex of the rhomb, both structures of a same device being connected to two vertices located on the same diagonal of the rhomb.

19. The system for detecting accelerations in three different directions and a speed of rotation along three different directions, comprising a detecting system according to claim 14 or 15 and further an accelerometer (ACC) and a gyrometer (GY).
